# EUROPEAN PATENT APPLICATION

(11) **EP 3 173 759 A1**
(43) Date of publication of application: **31.05.2017**
(21) Application number: 15196073.9
(22) Date of filing: 24.11.2015
(51) Int. Cl.: G01L 5/24, B60R 9/058

(54) **A TORQUE INDICATOR DEVICE FOR A VEHICLE LOAD CARRIER**

(71) Applicant: Thule Sweden AB, 330 33 Hillerstorp (SE)
(72) Inventor: Ferman, Magnus, 33154 Värnamo (SE); Bergman, Fredrik, 567 92 Vaggeryd (SE); Johansson, Johannes, Deceased (SE)
(74) Representative: Wallentin, Lars

(57) **Abstract**

The present invention relates to a torque indicator device for a vehicle load carrier. It has a torque application member (2) configured to receive an applied torque (T), a shaft (3) having a first end portion (4a) for imparting a torque to the vehicle load carrier and a biasing member (5) coupling the torque application member (2) to the first end portion (4a) of said shaft (3). The biasing member (5) is configured to transfer the applied torque (T) from the torque application member (2) to the first end portion (4a). A sound generating member (6) is coupled to the biasing member, which upon application of a pre-defined torque (T1) is configured to urge the sound generating member (6) to generate a sound. The biasing member (5) is also configured to transfer a second torque (T2) from the torque application member (2) to the first end portion (4a), which is greater than the pre-defined torque (T1)

## Description

### TECHNICAL FIELD

A torque indicator device for vehicle load carriers. The torque indicator device provide an audible and/or tactile feedback for operators who need to tighten vehicle load carriers for attachment directly or indirectly to vehicles. Additionally, the torque indicator device is specifically adapted to be fail proof and cost effective to manufacture.

### BACKGROUND

Vehicle load carriers such as roof racks comprising a load carrier bar and a first and second load carrier foot are widely used to provide vehicles with an extended load capacity. Also vehicle load carriers such as sport equipment accessory carriers are widely used to allow the mounting or tightening of sports equipment such as bikes and kayaks to the vehicle or vehicle roof rack. When a vehicle collides, either with another moving vehicle or with a stationary object, the crash violence imparted to the vehicle is usually significant and can impair severe structural damage. A load, carried to a vehicle load carrier, has its own inertia as the vehicle moves. In case of a collision, it is very important that the load on the vehicle is not accidentally released from the vehicle but remains on the vehicle.

A torque indicator device can be used for securing or tightening a vehicle load carrier directly or indirectly to a vehicle. The vehicle load carrier can have a nut, bolt, screw or any other means to allow the application of a torque to the vehicle load carrier for fastening the load carrier to the vehicle. Alternatively the torque indicator device can be used to fastening an accessory or sports equipment to the vehicle load carrier.

Torque indicator devices for use with or on vehicles, are usually used to provide a coupling and to tighten the load carrier directly or indirectly to the vehicle. However, using devices are not always optimal from a user perspective or they are not cost effective to produce. It may also be that when using known devices, the load carrier is attached too loose or too hard, i.e. too much torque is transferred, so that the attachment fittings on the vehicle or in the load carrier are damaged.

The published patent US8225679 discloses a torque indicator device which is construed to visibly indicate when a set torque threshold is met. Alternative embodiments of the description of this patent discloses torque indicator devices construed to audibly indicate when a set torque threshold is met including an over-tightening preventing mechanism. However, the solutions disclosed in US8225679 are not attractive from cost of manufacturing perspective, they are not designed to allow a higher torque transfer than indicated, they do not provide a sound indication, they are not fail proof and/or are not user friendly.

### SUMMARY

It is an object to provide for a solution, or to at least reduce the drawbacks mentioned above, or to provide for a useful alternative. The objects are at least partly met by a torque indicator device for a vehicle load carrier as described herein in more detail.

It is also an object to provide a device that can work at extreme cold climate such as from -30 degrees Celsius and extreme warm climate such as +40 degrees Celsius. Not only does it need to operate, it also need to be consistent in the level of torque imparted and/or indicated, during an extended time of use such as over decades of heavy outdoors use.

The torque indicator device comprises a torque application member configured to receive an applied torque. The torque indicator device further comprises a shaft having a first end portion for imparting a torque to a vehicle load carrier. A biasing member couples the torque application member to the first end portion of the shaft and is configured to transfer an applied torque from the torque application member to the first end portion. A sound generating member is coupled to the biasing member. Upon application of a pre-defined torque the biasing member is configured to urge the sound generating member to generate a sound.

The biasing member can be configured to transfer a second torque from the torque application member to the first end portion, which is greater than the pre-defined torque. The torque indicating device can be integrated into or fixated to the vehicle load carrier such as integrated into a vehicle roof rack foot, or a vehicle load carrier accessory.

The torque indicating device can be a separate part from the vehicle load carrier and/or removable from the vehicle load carrier. By having the torque indicating device as a separate part allows it to be used for applying torque to multiple locations on the vehicle load carrier or to many different vehicle load carriers. The multiple locations of the vehicle load carrier or the many different vehicle load carriers can have different requirements on the amount of torque that needs to be applied in order to allow a secure fastening or mounting.

By configuring the torque indicator device to provide a greater torque to the vehicle load carrier than a pre-defined torque allows for a more user-friendly and fail proof mechanism. In case the operator wants to apply a higher torque than the pre-defined torque he can do this. This may be the case if the operator conclude that the pre-defined torque is not sufficient to secure the vehicle load carrier or that the operator wants to secure a different vehicle load carrier requiring higher torques for mounting than the pre-defined torque.

The torque indicator device is by its simple construction fail proof, and/or will allow an operator to apply torque no matter of how and if a sound generated by the sound generating member is generated or identified by the operator.

The torque can be applied by an operator to the torque application member by hand or by using a separate tool. The torque application member can be in form of a handle that can easily be gripped by an operator by hand. It can allow the application of a high torque T such as above 5 Nm or more specifically between 5 and 15 Nm or more specifically between 7 and 11 Nm, or more specifically around 7 Nm, 8 Nm, 9 Nm or 10 Nm.

The torque application member can have an elongate shape, a round shape or a shape with gripping wings. An elongate shape is preferred to allow the application of a high torque combined with being less space or material consumption. The torque application member can have a compact design such as being less than 100 mm long and less than 20 mm wide.

The torque indicator device has a shaft which can have a circular cross section, a hexagonal cross section, a square cross section, a slotted shape or any combination of these shapes and cross sections along the length or parts of the length of the shaft. The shaft has a first end portion for imparting a torque to the vehicle load carrier. The first end portion can have a hexagonal cross section, a square cross section, a flat cross section, a slotted shape or any other shape or cross section that allows it to impart a torque to a vehicle load carrier. The second end portion can have a hexagonal cross section, a square cross section, a slotted shape or any other shape or cross section that allows it to be gripped by hand or to be coupled to a separate torque application member. The shaft can be made from metal.

The torque application member and said first end portion can be configured to rotate in relation to each other during the application of the torque. Upon release of the applied torque, the torque application member and the first end portion are configured to return to their initial relative rotational position as set before applying the torque.

The biasing member can be a torsion spring and preferably is an integral part of the shaft. This allows for a simple and rigid mechanism that is cost effective and/or fail proof.

The torque application member can be a handle with a cavity providing space for a working mechanism including the biasing member and/or the sound generating member.

A second end portion of the shaft can be the torque application member or is directly or indirectly coupled to the torque application member.

The relative positioning of the sound generating member to the biasing member can be adjusted to allow setting of level of the pre-defined torque. This allows for setting or calibrating the torque indicator device. This setting or calibration can be done during manufacturing of the torque indicator device or after by a retailer or operator. The setting can be to set a pre-defined torque to any of settings of any setting between 5 and 15 Nm, such as for example 7 Nm, 8 Nm, 9 Nm or 10 Nm or to fine tune the setting to find the wanted or calibrated pre-defined torque. The relative positioning can be accomplished by a sliding adjustability of the sound generating member (6) along the biasing member (5)

The sound generating device can be configured to generate a mechanically induced sound and/or vibration. The sound can be a clicking or snapping sound that is easily perceived by the operator. The sound can be in form of a vibration that can be tactically perceived by the operator in addition or instead of the hearing of the sound.

The sound generated by the sound generating member can be urged by transfer of a force from the biasing member to the sound generating member. The force can be a rotational force, torque, or pushing or pulling force. By having a mechanically urged generation of sound, no electronic components are needed.

The sound generating member can be directly coupled to the biasing member. For example it can be connected to the biasing member and to fully or in part rotate with the biasing member. For example at least an end part of the sound generating member can be connected to rotate with a part of the biasing member.

The sound generating member can be a sheet metal spring which upon receiving the force is caused to flex briefly to produce the sound. The sheet metal spring can have a convexity which upon flexing produces the sound by mechanical inversion, collapsing or deforming. The sound generating member can also be made of an alternative material such as plastic.

The sound generated by the sound generating member can be urged by transferring a rotational movement from the biasing member to the sound generating member. This transfer of rotational movement can induce a quick movement in the sound generating member, generating the sound.

The sound generating member can be one or more sleeves coupled to the torsion spring. The sleeve also functions as a protector for the working mechanism of the spring and/or provides a nice aesthetic appearance.

The torque application member can be a handle and wherein the biasing member and the sound generating member are positioned inside the handle. This allows for a compact design and protection against dirt and water coming into the mechanisms of the biasing and sound generating members. The simple working mechanism allows for designing a compact housing such as a length below 100 mm and a width below 20 mm.

The second end portion of the shaft can be directly coupled to the biasing member and the sound generating member. This allows for a rigid connection with few components. The torque indication device can be adapted to be integrated into the vehicle load carrier or it can be used as a separate and removable tool not integrated into the vehicle load carrier.

### BRIEF DESCRIPTION OF THE DRAWINGS

Non-limiting embodiments will be described in greater detail and with reference to the accompanying drawings in which;
figure 1 shows a torque indicator device for a load carrier in exploded view
figure 2 shows the torque indicator device of figure 1 in assembled form and front view
figure 3a-c shows details of the torque indicator device of figure 1
figure 4 shows an alternative embodiment of the torque indicator device for a load carrier in exploded view
figure 5a shows a torque indicator device for a load carrier in cross section view and without any torque applied
figure 5b shows a torque indicator device for a load carrier in cross section view and with torque applied
figure 6a shows a torque indicator device in cross section view from the side
figure 6b shows a torque indicator device in cross section view from the top

### DETAILED DESCRIPTION OF EMBODIMENTS

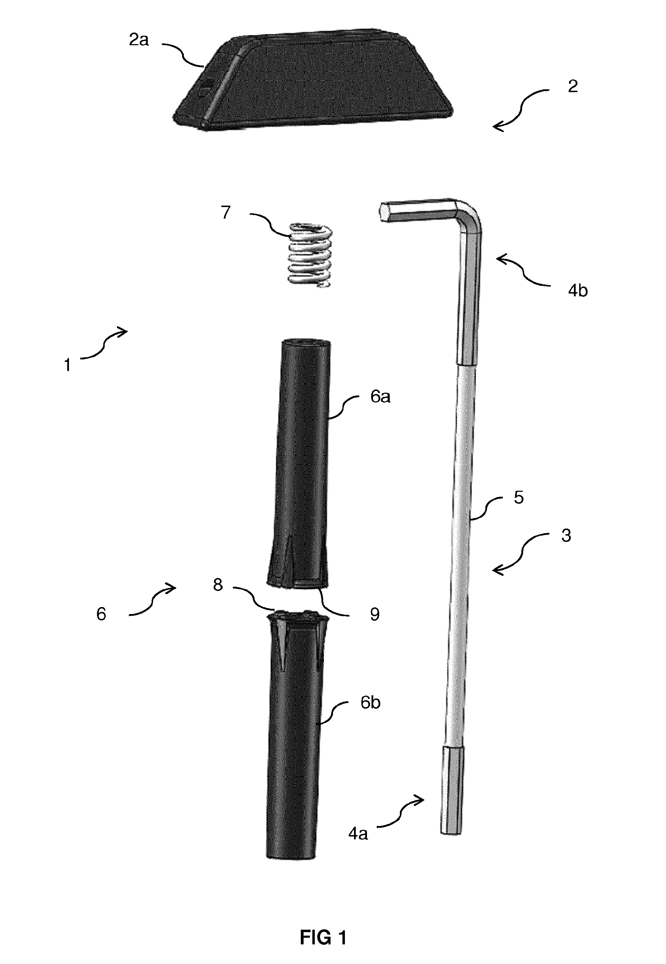

Figure 1 shows a first embodiment of a torque indicator device 1 for a vehicle load carrier (not shown) in exploded view. The torque application member 2 is configured to receive an applied torque T and is shaped as a handle 2a for allowing an operator to easily grip and transfer a torque to the device. The handle can have compact design with a length around or below 100 mm and width around or below 20 mm.

Figure 1 shows a shaft 3 having an first end portion 4a with a hexagonal cross section, a center part with a round cross section, and a second end portion 4b with a hexagonal cross section. The second end portion 4b of figure 1 shows a right angled bend in the shaft. The second end portion 4b can bend in any angle and need not be straight angled. The purpose with having a bend is to allow a secure connection to the torque application member. The bend of the second end portion 4b of the shaft 3 can in itself form the torque application member 2. The second end portion 4b can also be straight and be shaped in any way such as having a flat cross section, slotted shape or hexagonal cross section to allow an effective application of torque T. The shaft 3 can be 100-200 mm long such as around 180 mm long.

The shaft 3 in figure 1 is a biasing member 5 such as a torsion spring allowing the first end portion 4a and second end portion 4b to rotate with respect to each other when a torque is applied. Thus the shaft 3 is the biasing member 5, and specifically the central circular cross sectioned part of the shaft. This means that the torque application member 2 and the first end portion 4a can rotate in relation to each other during the application of a torque. An operator wanting to securely mount a vehicle load carrier inserts the first end portion 4a in a position on the vehicle load carrier, such as a nut on the vehicle load carrier, in order to impart a torque T to the vehicle load carrier. The operator applies a torque T to the torque application member which causes the shaft 3 to rotate and the first end portion 4a to apply a corresponding torque to the vehicle load carrier. It is assumed that the applied torque T is almost same or at level of imparted torque, that is, there is not a high degree of loss of torque. A counter force creates a tension in the torsion spring of shaft 3 which works as a biasing member.

A sound generating member 6 is coupled to the second end portion 4b of the shaft 3, which in this case is the biasing member 5. The sound generating member 6 comprises a first sleeve 6a which will rotate together with the second end portion 4b, that is the upper hexagonal part of the shaft 3. The sound generating member 6 also comprises a second sleeve 6b which is connected to and will rotate together with the first end portion 4a, that is the lower hexagonal part of the shaft 3. The second sleeve 6b is fixedly secured to the first end portion 4a, that is it cannot slide along the shaft 3 during operation of the device. The first sleeve 6a can slide along second end portion 4b of the shaft 3 during operation of the device. The first sleeve 6a is forced by a spring 7 into abutting connection with the second sleeve 6b. The spring 7 is a helical spring but can be any type of compression spring such as coil spring, helical spring, leaf spring, flat spring or similar. The first sleeve 6a and second sleeve 6b can rotate with respect to each other during the application of the torque T. The first sleeve 6a has one or more apertures 9 on its end surface facing the second sleeve 6b. The second sleeve 6b has one or more protrusions 8 on its end surface facing the first sleeve.

The pre-defined torque T1 can be set or calibrated by adjusting the relative positioning of the sound generating member 6 on the first end portion 4a of the shaft 3. This results in a relative positioning of the sound generating member 6 in relation to the biasing member 5. Either by rotationally or sliding re-position the first sleeve 6a or second sleeve 6b on the first end portion 4a and/or second end portion 4b of the shaft 3. The required pre-set torque T1 will then be set accordingly.

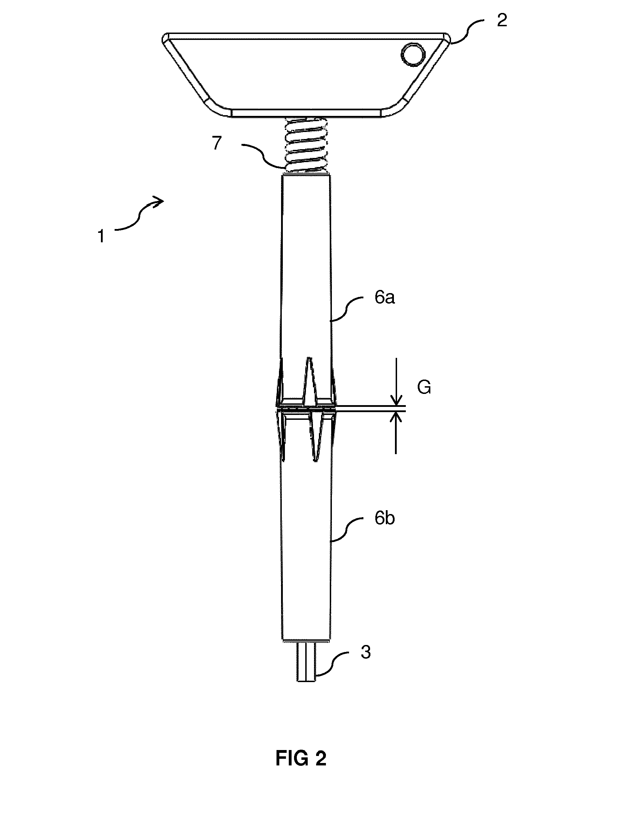

Figure 2 shows a similar torque indication device as described for figure 1 but in assembled form. The sound generating member 6 is in form of a first sleeve 6a and second sleeve 6b. A gap G exist between the first sleeve 6a and second sleeve 6b.

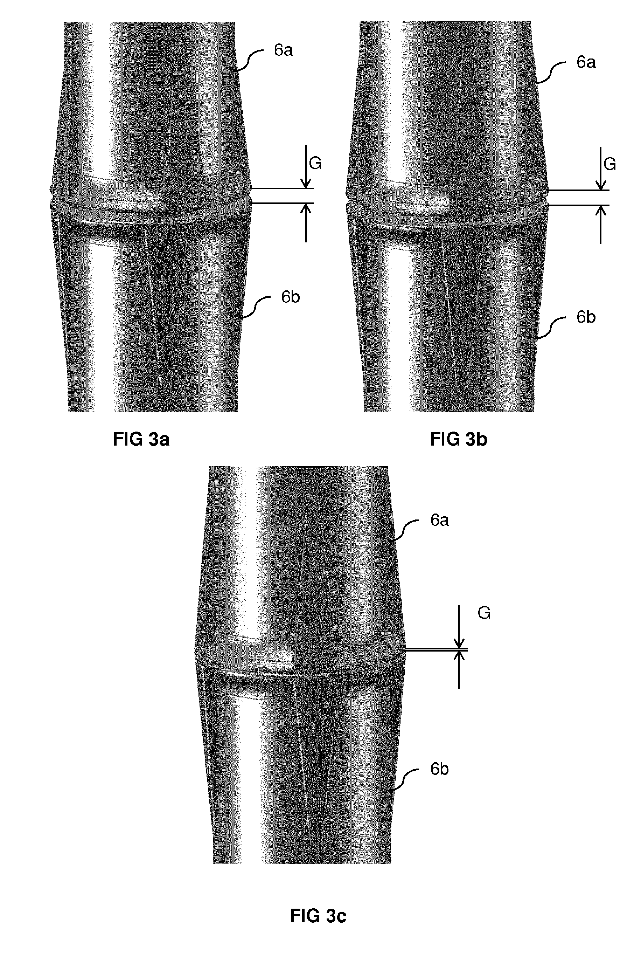

Figures 3a-3b shows how the sound generating member 6 in form of the first sleeve 6a and second sleeve 6b cooperate in order to generate a sound to indicate that the pre-defined torque T1 is met.

Figure 3a shows the torque indicating device 1 with no torque applied. The first sleeve 6a is forced by spring 7 into connection with second sleeve 6b. The protrusions on the end surface of the second sleeve 6b will abut the end surface of the first sleeve 6a to create a gap G between the surfaces of the sleeves 6a 6b. This gap G correspond to the height of the protrusions 8. The gap G can be 0,5-10 mm.

Figure 3b shows how the first sleeve 6a and second sleeve 6b rotate with respect to each other when a torque T is applied. The torque is not as great as the pre-defined torque T1. The sleeves have rotated with respect to each other in 6 degrees. Still a gap G exist between the sleeves.

Figure 3c shows how the first sleeve 6a and second sleeve 6b have rotated 12 degrees with respect to each other when the pre-defined torque T1 has been applied. The protrusions 8 on the second sleeve have entered the apertures 9 in the first sleeve resulting in a sound and/or vibration that can be observed by the operator. By the fact that the spring force from spring 7 is sufficiently high on the first sleeve this results in a loud sound such as snapping or clicking sound. The gap G is in this position 0 mm or close to 0 mm.

After sound is generated it is possible to continue and apply a higher second torque T2 (not shown). It is also possible to release the applied torque T, which will result in that the torque application member 2 and the first end portion 4a will return to their initial relative rotational position as set before applying the torque T (figure 3a).

By applying a second torque T2 which is greater than the pre-defined torque T1 the torque indicator device will transfer this greater torque T2 to the first end portion 4a for imparting this greater torque T2 to the vehicle load carrier. This allows the operator to transfer greater torques to the load carrier in case he decides this is necessary after noting the sound indicating that the pre-defined torque T1 is met.

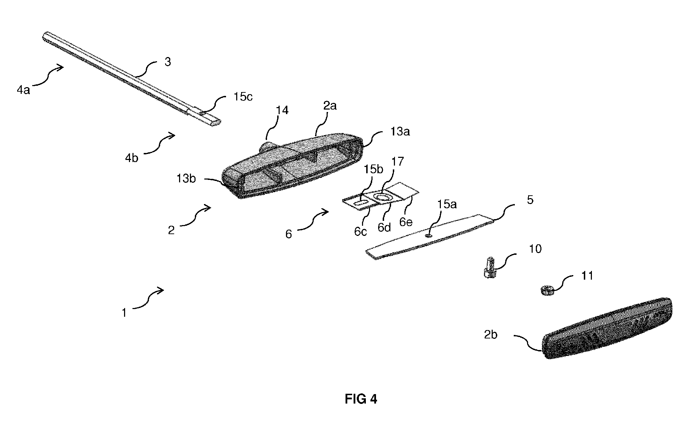

Figure 4 shows an alternative embodiment of a torque indicator device 1 for a vehicle load carrier (not shown) in an exploded view. The torque application member 2 is configured to receive an applied torque T and is shaped as a handle 2a for allowing an operator to easily grip and transfer a torque to the device. The first end portion 4a of the shaft 3 has a hexagonal shape for imparting a torque to a vehicle load carrier. The handle 2a has an internal cavity for the working mechanism including the biasing member 5 and the sound generating member 6. A cover 2b is used to close the cavity and protect the internal working mechanism. The handle can have a length below 100 mm and a width below 20 mm. The shaft 3 can be 100-200 mm long such as around 150 mm long.

The second end portion 4b of the shaft is inserted through a hole 14 in the handle 2a. The hole 14 allows for a relative rotational movement between the second end portion 4b and the handle 2a. The second end portion 4b of the shaft 3 has a flat cross section. A flat cross section on the second end portion 4b allows a robust connection to the biasing member 5 or sound generating member 6. The second end portion 4b can also have a slot or other shape or cross section.

The second end portion 4b is connected to the biasing member 5. The biasing member is a flat spring preferably made from metal such as spring steel. It has an aperture 15a in the central part to allow the coupling to a hole 15c in the second end portion 4b of the shaft and a coupling to a hole 15b in the sound generating member 6. The biasing member 5 is coupled to the torque application member 2 via slot 13a and slot 13b formed in the internal end parts of handle 2a. This fixates the biasing member 5 in the torque application member 2 but allows the central part of the biasing member 5 to rotate due to the biasing action imparted by the second end portion 4b of the shaft 3. A nut 11 and bolt 10 are used to couple the second end portion 4b of the shaft 3 to the biasing member 5 and the sound generating member 6 using the corresponding holes 15a, 15b, 15c. This coupling is inside the torque application member 2 which comprises the handle 2a and cover 2b.

The sound generating member 6 in figure 4 is a sheet metal spring which upon receiving the force is caused to flex briefly to produce the sound. The sheet metal spring has three sections. A first section 6c in one end part has the hole 15b in form of an elongate hole. The elongate hole allows for a relative positioning of the sound generating member 6 to the biasing member 5 which allows for setting of level of the pre-defined torque T1. A relative positioning is then accomplished by a sliding adjustability of the sound generating member 6 along the biasing member 5. A second section 6d in the central part of the sound generating member 6 comprises a bend and a convexity formed in the sheet metal. This convexity is the part generating a sound when deformed by the coupling to the rotating central part of the biasing member. The third section 6e in the other end part of the sound generating member 6 bends and forms a connection with the biasing member 5.

It can be possible to replace the biasing member 5 and/or the sound generating member 6 to an alternative different biasing member or sound generating member in order to set the properties of the sound generated or level of the pre-defined torque T1.

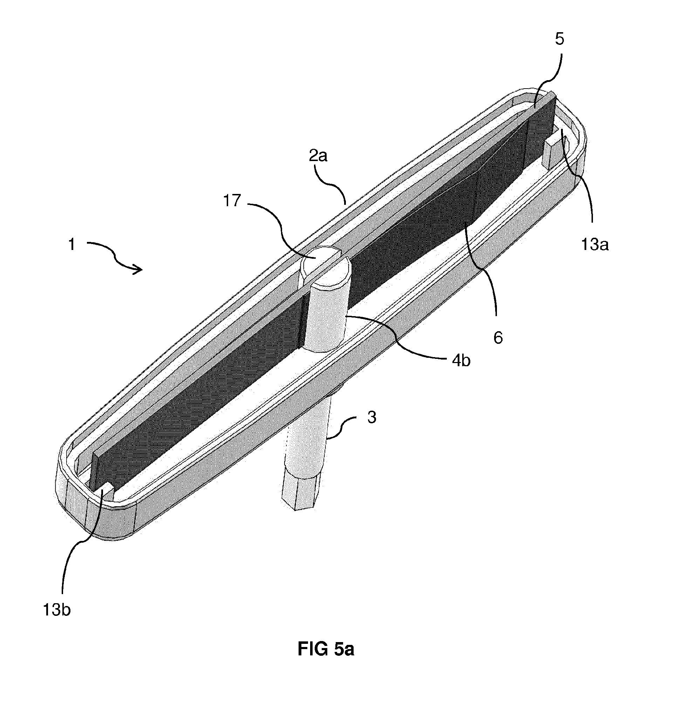

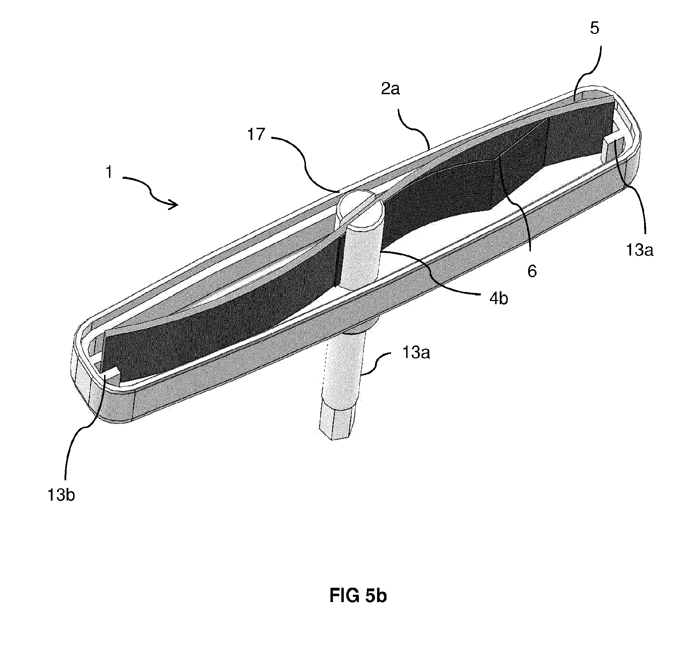

Figures 5a and 5b show a torque indicator device 1 in assembled form and schematically how it works in use. The shaft has a second end portion 4b with a slotted shape. The biasing member 5 and sound generating member 6 are coupled to the second end portion 4b by being inserted into the slot 17. This coupling allows for a relative positioning of the sound generating member 6 to the biasing member 5 which allows for setting of level of the pre-defined torque T1.

The biasing member 5 is coupled to the torque application member 2 via slot 13a and slot 13b formed in the end parts of handle 2a. This fixates the biasing member 5 in the torque application member 2 but allows the central part of the biasing member 5 to rotate due to the biasing action imparted by the second end portion 4b of the shaft 3.

The biasing member 5 shown in figures 5a and 5b is a sheet metal spring and has a sound generating convexity in the central part (not shown).

Figure 5a shows the torque indicator device 1 with no torque T applied.

Figure 5b shows the torque indicator device 1 with a torque T is applied which is the pre-defined torque T1. The shaft 3 and second end portion 4b have rotated slightly in relation to the torque application member 2 imparting the pre-defined torque T1 to the biasing member 5 which will bend correspondingly. The sound generating member 6 in form of the sheet metal will bend since it is coupled to the biasing member and generate a sound such as loud clicking or snapping sound. This sound can be noted or perceived by the operator who will know that the pre-defined torque has been met.

By applying a second torque T2 which is greater than the pre-defined torque T1 the torque indicator device will transfer this greater torque T2 to the first end portion 4a for imparting this greater torque T2 to the vehicle load carrier.

Upon release of the applied torque T, the torque application member 2 and the first end portion 4a will return to their initial relative rotational position as set before applying the torque T. This position is shown in figure 5a.

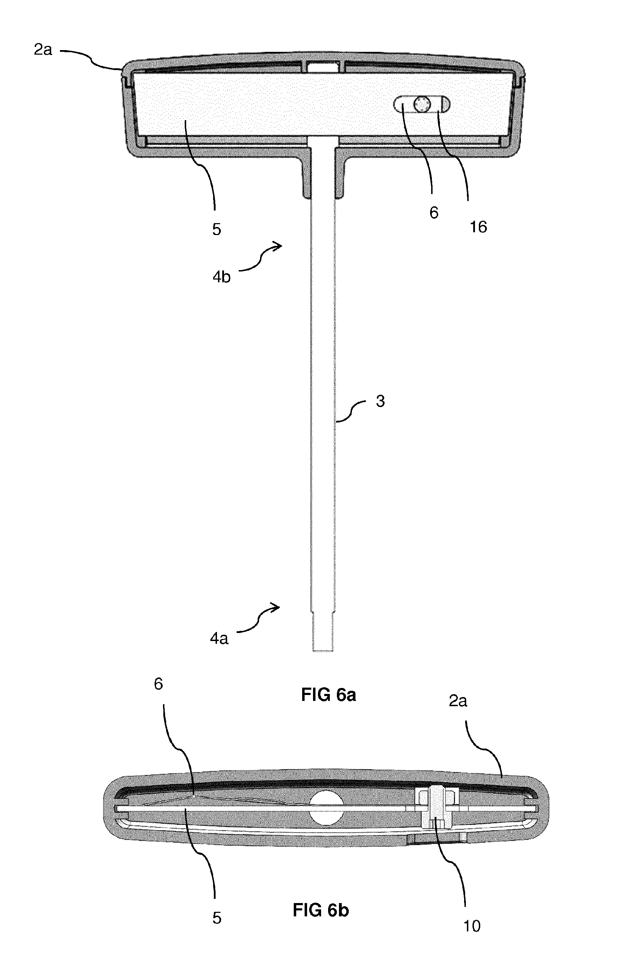

Figures 6a and 6b show an alternative embodiment of a torque indicator device. Specifically it shows how the sound generating member 6 can be coupled to the biasing member 5 in a location which is off center. This results in that the sound generating member 6 is not coupled directly to the second end portion 4b of the shaft 3 such as in the embodiment shown in figure 4. The biasing member 5 has an elongate hole or slot 16 through with a fastening member such as bolt 10 can be inserted to mount the sound generating member to the biasing member. This allows the relative positioning of the sound generating member 6 to the biasing member 5, which in turn allow setting of level of the pre-defined torque T1.

Figure 6b shows how an elongate opening in the side of the handle 2a of the torque application member 2 allows the access to the bolt 10. This allows easy access to the release of the coupling between the biasing member 5 and the sound generating member 6 to make the adjustment of setting of pre-defined torque T1.

It should be noted that the features described herein can be combined in different ways even though not explicitly mentioned or described in combination. Likewise, combinations of features disclosed herein does not necessarily need to be combined together but could be used alone or in other combinations.

## Claims

1. A torque indicator device (1) for a vehicle load carrier comprising
- a torque application member (2) configured to receive an applied torque (T),
- a shaft (3) having a first end portion (4a) for imparting a torque to the vehicle load carrier,
- a biasing member (5) coupling the torque application member (2) to the first end portion (4a) of said shaft (3) and configured to transfer the applied torque (T) from the torque application member (2) to the first end portion (4a),
- a sound generating member (6) coupled to the biasing member (5), and wherein
- the biasing member is configured to urge the sound generating member (6) to generate a sound upon application of a pre-defined torque (T1).

2. A torque indicator device (1) according to claim 1 wherein the biasing member (5) is configured to transfer a second torque (T2) from the torque application member (2) to the first end portion (4a), which is greater than the pre-defined torque (T1).

3. The torque indicator device (1) according to any preceding claim wherein
- said torque application member (2) and said first end portion (4a) are configured to rotate in relation to each other during the application of the torque (T), and wherein
- upon release of the applied torque (T), the torque application member (2) and the first end portion (4a) are configured to return to their initial relative rotational position as set before applying the torque (T).

4. The torque indicator device according to any of the preceding claims wherein the biasing member (5) is a torsion spring and preferably is an integral part of the shaft (3).

5. The torque indicator device according to any of the preceding claims wherein a second end portion (4b) of the shaft (3) is the torque application member (2) or is coupled to the torque application member (2).

6. The torque indicator device according to any of the preceding claims wherein a relative positioning of the sound generating member (6) to the biasing member (5) can be adjusted to allow setting of level of the pre-defined torque (T1).

7. The torque indicator device according to claim 6 wherein the relative positioning is accomplished by a sliding adjustability of the sound generating member (6) along the biasing member (5).

8. The torque indicator device according to any of the preceding claims wherein the sound generating device (6) is configured to generate a mechanically induced sound or vibration.

9. The torque indicator device according to any of the preceding claims wherein the sound generated by the sound generating member (6) is urged by transfer of a force from the biasing member (5) to the sound generating member (6).

10. The torque indicator device according to claim 9 wherein the sound generating member is a sheet metal spring which upon receiving the force is caused to flex briefly to produce the sound.

11. The torque indicator device according to any preceding claim wherein the sound generated by the sound generating member (6) is urged by transfer of a rotational movement from the biasing member (5) to the sound generating member (6).

12. The torque indicator device according to claim 9 wherein the sound generating member (6) is a sleeve coupled to the torsion spring.

13. The torque indicator device according to any of the preceding claims wherein the torque application member (2) is a handle and wherein the biasing member (5) and the sound generating member (6) are positioned inside the handle.

14. The torque indicator device according to claim 12 wherein a second end (4b) of the shaft is directly coupled to the biasing member (5) and the sound generating member (6).
